# DEMANDE DE BREVET EUROPEEN

(11) **EP 1 862 283 A1**
(43) Date de publication de la demande: **05.12.2007**
(21) Numéro de dépôt: 06114918.3
(22) Date de dépôt: 02.06.2006
(51) Int. Cl.: B29C 31/00, B29D 23/20, B65B 43/50, B65G 47/84

(54) **Mandrin pour installation d'assemblage de composants de tubes**

(71) Demandeur: Aisapack Holding SA, 1896 Vouvry (CH)
(72) Inventeur: Stahl, Christophe, 1084, Carrouge (CH); Voigtmann, Jean-Pierre, 1893, Muraz (CH)
(74) Mandataire: Grosfillier, Philippe

(57) **Abrégé**

Mandrin (2) pour la formation, l'assemblage et/ou le transfert de composants de tubes tels que jupes ; ledit mandrin (2) comprenant un élément longitudinal à symétrie axiale agissant comme support d'un ou plusieurs composants de tubes, ledit mandrin (2) étant caractérisé en ce qu'il est monté mobile selon une direction qui se confond avec son axe principal (9).

## Description

### Domaine de l'invention

La présente invention se situe dans le domaine des emballages en forme de corps creux tubulaire. Elle concerne plus précisément les mandrins utilisés pour la formation, l'assemblage et le transfert des composants de tube tels que jupes ou épaules.

### Etat de la technique

Un mandrin se présente le plus souvent sous la forme d'un corps cylindrique qui est adapté pour accueillir un composant ou divers composants de tubes, p.ex. des jupes.

Le plus souvent, lors d'une opération sur un ou plusieurs composants de tubes, p.ex. lors du soudage d'une épaule sur une jupe, les mandrins sont statiques et la ou les stations de travail se déplacent par rapport à ceux-ci.

On connaît également des installations d'assemblage où les mandrins sont fixés sur un élément commun, p.ex. un plateau, ce dernier étant mis en rotation lors des différentes opérations.
Cependant, même dans ce deuxième type d'installation, il est toujours nécessaire d'impartir un mouvement au stations de travail.

Le fait de devoir déplacer les stations de travail augmente la masse en mouvement ainsi que les contraintes sur des pièces telles que câbles, flexibles et connectique qui alimentent la station de travail.

Il en résulte que les dispositifs de l'état de la technique sont relativement complexes et encombrants.

Il existe donc un besoin de pouvoir simplifier les installations d'assemblage de tubes de l'état de la technique.

### Résumé de l'invention

La présente invention vise notamment à remédier aux problèmes précités.

Elle concerne un mandrin pour la formation, l'assemblage et/ou le transfert de composants de tubes, p.ex. de jupes ; le mandrin comprenant un élément longitudinal à symétrie axiale agissant comme support d'un composant de tube, ledit mandrin étant caractérisé en ce qu'il est monté mobile selon une direction qui se confond avec son axe principal.

Selon un premier mode de réalisation de l'invention, la mobilité du mandrin est assurée par un ensemble bielle-arbre de commande auquel le mandrin est rendu solidaire.

Avec l'ensemble bielle-arbre, on obtient une force axiale élevée sur le mandrin en fin de mouvement tout en conservant un faible couple d'entraînement de l'arbre.

L'invention se rapporte également à un ensemble constitué par la fixation d'un mandrin tel que décrit précédemment à une unité d'assemblage rotative, l'axe de rotation de l'unité de transfert étant vertical et perpendiculaire à l'axe du mandrin.

Dans cette configuration, plusieurs mandrins peuvent être utilisés avec la même unité d'assemblage. Avantageusement, ils sont disposés par groupes verticaux et par séries horizontales, le tout formant une tourelle.

Selon une autre variante de l'invention, l'ensemble est constitué par la fixation du mandrin à une unité de transfert rotative dont l'axe de rotation est parallèle à l'axe du mandrin.

L'invention sera mieux comprise ci-après au moyen d'une description détaillée et d'exemples non-limitatifs illustrés par des figures.

### Brève description des figures

La figure 1 représente une tourelle comportant plusieurs mandrins selon l'invention, ces derniers étant en contact avec une station de travail.
La figure 2 représente le même ensemble que celui de la figure 1 mais avec des mandrins rétractés.
La figure 3 illustre la rotation de la tourelle des figures 1 et 2.

### Liste des références numériques utilisées dans les figures

1. Tourelle
2. Mandrin
3. Bloc de mandrins
4. Station de travail
5. Bielle
6. Arbre de commande
7. Face externe de mandrin
8. Axe de symétrie de la tourelle
9. Axe de symétrie des mandrins

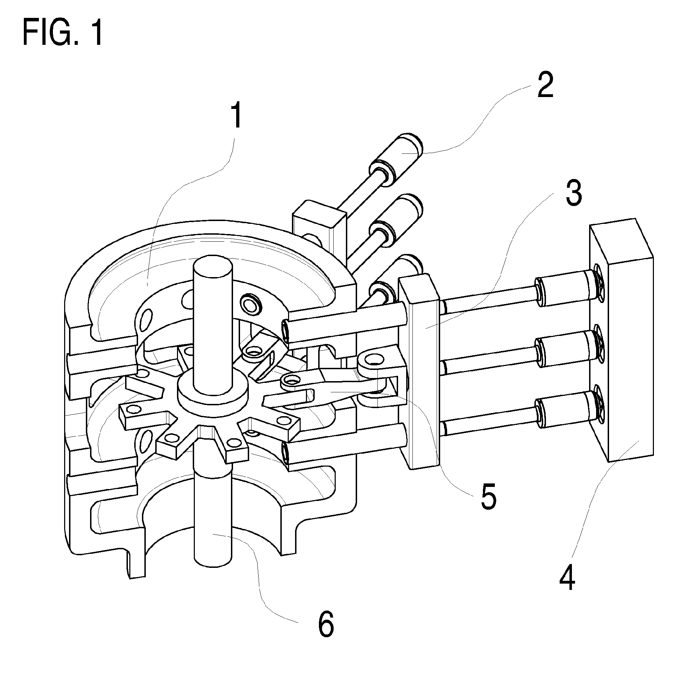

La tourelle 1 illustrée sur les figures 1 à 3 comporte un bloc central vertical de forme cylindrique qui comporte des groupes de mandrins 2 distribués verticalement et qui s'étendent selon des directions 9 perpendiculaires à l'axe de symétrie de la tourelle 1. Les mandrins 2 sont en outre regroupés par séries selon un plan horizontal et forme de la sorte un empilement ou, exprimé différemment, une succession d'étages.
Les mandrins 2 sont montés mobiles selon une direction 9 qui se confond avec leurs axes de symétrie respectifs.
Le déplacement des mandrins 2 est assuré par un système comprenant des bielles 5 qui sont entraînées par l'arbre de commande 6 de la tourelle 1.

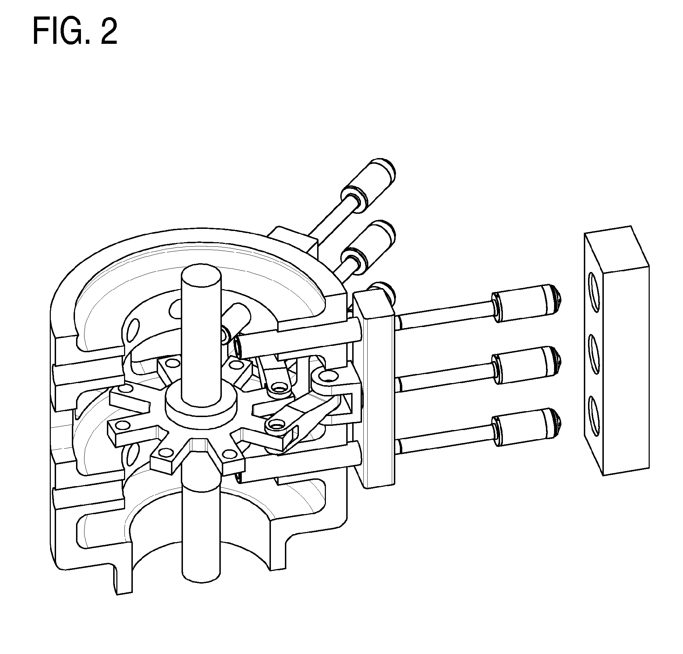

Dans la position illustrée sur la figure 2, les mandrins 2 sont en contact avec une station de travail, p.ex. pour le soudage d'une épaule sur une jupe (non-illustré).

Dans la position illustrée sur la figure 2, les mandrins 2 sont rétractés.

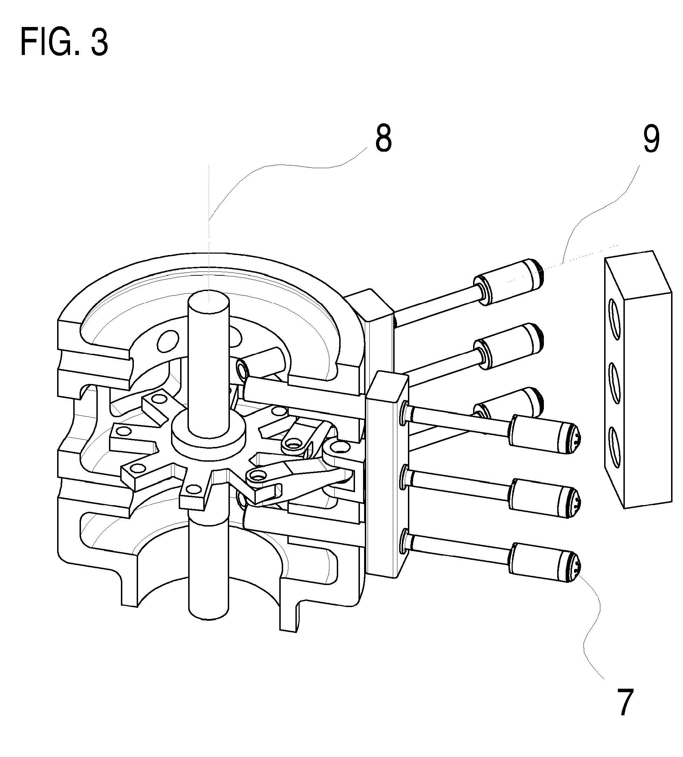

La figure 3 illustre le déplacement angulaire d'un groupe de mandrins 2.

Il va de soi que l'invention ne se limite pas aux exemples illustrés décrits précédemment.
La tourelle n'est pas nécessairement disposée selon une direction verticale.
Sa section peut être de forme quelconque, polygonale ou circulaire.
La distribution des mandrins peut également être quelconque.
La rotation de la tourelle est de préférence indexée mais elle peut être continue. Les mandrins peuvent être fixé à un disque rotatif dont l'axe de rotation est parallèle à l'axe des mandrins.
Tout autre mécanisme permettant d'impartir un mouvement longitudinal des mandrins fait également partie de l'objet de la présente invention.

Plus généralement, l'invention couvre n'importe quel type de mandrin tel que défini dans les revendications.

## Revendications

1. Mandrin (2) pour la formation, l'assemblage et/ou le transfert de composants de tubes tels que jupes ; ledit mandrin (2) comprenant un élément longitudinal à symétrie axiale agissant comme support d'un ou plusieurs composants de tubes, ledit mandrin (2) étant **caractérisé en ce qu'**il est monté mobile selon une direction qui se confond avec son axe principal (9).

2. Mandrin selon la revendication 1 **caractérisé en ce que** la mobilité du mandrin (2) est assurée par un ensemble bielle-arbre de commande (5,6) auquel le mandrin (2) est rendu solidaire.

3. Ensemble constitué par la fixation d'un mandrin selon la revendication 1 ou 2 à une unité d'assemblage rotative (1), l'axe de rotation (8) de ladite unité de transfert (1) étant perpendiculaire à l'axe (9) du mandrin (2).

4. Ensemble selon la revendication 3 comprenant plusieurs mandrins (2) disposés par groupes verticaux et par séries horizontales.

5. Ensemble constitué par la fixation d'un mandrin selon la revendication 1 ou 2 à une unité d'assemblage rotative (1), l'axe de rotation (8) de ladite unité d'assemblage (1) étant parallèle à l'axe (9) du mandrin (2).
